# EUROPEAN PATENT SPECIFICATION

(11) **EP 3 152 164 B1**
(45) Date of publication and mention of the grant of the patent: **11.09.2019**
(21) Application number: 15728817.6
(22) Date of filing: 08.06.2015
(51) Int. Cl.: C01F 5/02, C09C 1/02, C09C 3/04

(54) **INORGANIC GRANULATE MATERIALS**
ANORGANISCHE GRANULATMATERIALIEN
MATÉRIAUX GRANULÉS INORGANIQUES

(30) Priority: 06.06.2014 EP 14290165
(43) Date of publication of application: 12.04.2017
(73) Proprietor: IMERTECH SAS, 75015 Paris (FR)
(72) Inventor: LIKITALO, Mikko, 1410 Waterloo (BE); BIZA, Peter, 31170 Tournefeuille (FR)
(74) Representative: Haseltine Lake Kempner LLP
(86) International application number: PCT/EP2015/062638
(87) International publication number: WO 2015/185752

(56) References cited:
- WO-A1-89/03863
- WO-A1-2005/061408
- WO-A1-2014/195478
- GB-A- 1 474 584
- US-A- 4 626 290
- US-A- 6 074 473
- US-A1- 2003 096 143

## Description

### FIELD OF THE INVENTION

The present invention relates to granulated inorganic materials. In particular, the materials are in granulated form. Also part of the invention is a method of preparation of such inorganic granulated materials.

### BACKGROUND OF THE INVENTION

Traditionally, inorganic particulate materials are provided in the shape of powders, granulates, agglomerates, coagulates, or in granulated form. It is a common problem that pure alkaline earth metal oxides and alkaline earth metal hydroxides are difficult to granulate. In order to improve handling and transport of large amounts of alkaline earth metal oxides and alkaline earth metal hydroxides, it would be desirable to provide these particulate materials in granulated form.

GB 1 474 584 A discloses a method of making magnesium hydroxide pellets from sea water and magnesia. However, the process is complex and involves both chemical and mechanical steps.

It is therefore sought to provide a method for granulating particulate alkaline metal hydroxides and alkaline metal oxides in order to improve handling and transport of these materials.

### SUMMARY OF THE INVENTION

The present invention is defined in the appended claims.

It has been found surprisingly that particulate alkaline earth metal hydroxides and alkaline earth metal oxides or mixtures thereof may be granulated using techniques known to the skilled person, if admixed with one or more process aid additives. The one or more process additives may be selected from talc, bentonite, zeolite, diatomaceous earth, cationic mica, hydrophobic carbonates, and mixtures thereof. It was found that such granulated particulate compositions have improved properties regarding handling, transport and storage.

The alkaline earth metal in the particulate alkaline earth metal oxides or alkaline earth metal hydroxides or mixtures thereof is selected from magnesium, calcium, and mixtures thereof. These hydroxides and oxides are the most commonly used when it comes to alkaline earth metals, therefore the advantages are particularly noticeable.

The amount of the particulate alkaline earth metal oxide or alkaline earth metal hydroxide or mixture thereof ranges from 50 wt.-% to 99.9 wt.-%, and the amount of the one or more process additives ranges from 50 wt.-% to 0.1 wt.-%, each on the basis of the total solids content of the composition to be granulated. It has been found that a wide range of compositions can be obtained, without detriment to the advantages over the state of the art.

In one embodiment, the process additive is a talc, such as for example a talc selected from micronized talc, bimodal talc, and cationic talc. It has been found that these are particularly advantageous process additives.

In one embodiment, the amount of particulate alkaline earth metal oxide or alkaline earth metal hydroxide or mixture thereof may be about 90 wt.-%, or about 95 wt.-%, and the amount of process additive may be about 10 wt.-%, or about 5 wt.-%, on the basis of the total solids content of the composition to be granulated.

According to one aspect, the particulate alkaline earth metal oxide or alkaline earth metal hydroxide is magnesium hydroxide.

According to one aspect, the granulating is carried out in a pelletiser.

The present invention further encompasses granulated materials comprising particulate alkaline earth metal hydroxides and alkaline earth metal oxides or mixtures thereof and one or more process additives. In one embodiment, the invention concerns a granulated composition comprising a mixture of one or more alkaline earth metal hydroxides or oxides with a process additive. The process additive may be one or more process additives from the list as described above.

According to one aspect, the granulated compositions may have a moisture content from 0.1 wt.-% to 35 wt.-%, based on the total weight of the composition. According to a further aspect, the compositions may comprise from 0.1 wt.-% to 50 wt.-% process additive and from 99.9 wt.-% to 50 wt.-% particulate alkaline earth metal oxide or alkaline earth metal hydroxide or mixtures thereof, based on the total solids content of the granulated compositions. For example, the compositions may comprise from 0.2 wt.-% to 40 wt.-% process additive, or from 0.5 wt.-% to 35 wt.-% process additive, or from 1 wt.-% to 30 wt.-% process additive, or from 2 wt.-% to 25 wt.-% process additive, or from 2.5 wt.-% to 20 wt.-% process additive, or from 5 wt.-% to 15 wt.-% process additive, such as for example about 2 wt.-% process additive, or about 3 wt.-% process additive, or about 4 wt.-% process additive, or about 5 wt.-% process additive, or about 6 wt.-% process additive, or about 7 wt.-% process additive, or about 8 wt.-% process additive, or about 9 wt.-% process additive, or about 10 wt.-% process additive. For example, the compositions may comprise from 99.8 wt.-% to 60 wt.-% particulate alkaline earth metal oxide or alkaline earth metal hydroxide or mixtures thereof, or from 99.8 wt.-% to 60 wt.-% particulate alkaline earth metal oxide or alkaline earth metal hydroxide or mixtures thereof, or from 99.5 wt.-% to 65 wt.-% particulate alkaline earth metal oxide or alkaline earth metal hydroxide or mixtures thereof, or from 99 wt.-% to 70 wt.-% particulate alkaline earth metal oxide or alkaline earth metal hydroxide or mixtures thereof, or from 98 wt.-% to 75 wt.-% particulate alkaline earth metal oxide or alkaline earth metal hydroxide or mixtures thereof, or from 97.5 wt.-% to 80 wt.-% particulate alkaline earth metal oxide or alkaline earth metal hydroxide or mixtures thereof, from 95 wt.-% to 85 wt.-% particulate alkaline earth metal oxide or alkaline earth metal hydroxide or mixtures thereof, such as for example about 98 wt.-% particulate alkaline earth metal oxide or alkaline earth metal hydroxide or mixtures thereof, or about 97 wt.-%, or about 96 wt.-%, or about 95 wt.-%, or about 94 wt.-%, or about 93 wt.-%, or about 92 wt.-%, or about 91 wt.-%, or about 90 wt.-% particulate alkaline earth metal oxide or alkaline earth metal hydroxide or mixtures thereof.

According to one aspect, the granulated composition may be in the shape of a brick, a briquette, a pellet, a pressing, a mould, a preform, a spray-dried powder, a tablet, an aggregate, a rod, or an agglomerate. Typically, if the granulated composition is a spray-dried powder, the moisture content may be 2 wt.-% or less, based on the total weight of the composition.

Also part of the present invention is a method for the reduction of the energy required to granulate an alkaline earth metal oxide or an alkaline earth metal hydroxide or a mixture thereof, the method comprising the step of admixing talc to the said alkaline earth metal oxide or alkaline earth metal hydroxide or mixture thereof.

As used herein, the term "granulated" may be equivalent to for example "compacted", the term "granulation" may be equivalent to for example "compaction", and the term "granulating" may be equivalent to for example "compacting".

As used herein, it is understood that the granulated particulate materials according to the present invention substantially only comprise particulate alkaline earth metal hydroxides, or alkaline earth metal oxides, or mixtures thereof, and one or more process aid additives, such that the total amount of these components in the materials according to the present invention adds aup to 100 wt.-% or close to 100 wt.-%, taking into account unavoidable impurities.

It is understood that the following description concerns exemplary embodiments of the present invention and shall not be limiting the scope of the claims.

### DETAILED DESCRIPTION OF THE INVENTION

The present invention according to the appended claims provides granulated particulate materials, methods for providing granulated particulate materials, and compositions obtained from such methods.

The granulated particulate materials according to the present invention comprise an alkaline earth hydroxide or oxide in the presence of a process additive. It was found that in granulated form, such materials present considerable advantages when it comes to handling, transport and/or storage of the materials, due to the avoidance of formation of dust, the reduction in weight when compared to aqueous slurries and the improved stability, to name just a few.

Granulating of particulate materials is typically carried out with the addition of moisture in order to create binding between discrete powder particles to give the granulated product a minimum stability required for handling, storage and transport. In the case of alkaline earth metal hydroxides and oxides, this leads to problems with respect to adhesion of particles and granulated materials in the granulating apparatus, leading to blockages of the apparatus, down-time, damage and even breakdown. According to one aspect, this problem could be solved by the admixture of one or more process additives to the material to be granulated, which leads to a stronger binding of the granulated material and resulting reduced adhesion to granulating equipment.

In a further unexpected result, it was found that the energy requirements for obtaining the granulated products were significantly reduced.

In a certain embodiment, the granulated material is a mixture of particulate magnesium hydroxide and talc. In a further embodiment, the granulating is carried out in a pelletiser. The pelletiser may be set to work at a temperature from 10°C to 90°C, such as for example from 20°C to 70°C, or from 25°C to 60°C, or from 30°C to 40°C, or for example at room temperature. The energy requirement for obtaining stable pellets may be from 5 kWh/t to 50 kWh/t, such as for example from 10 kWh/t to 30 kWh/t, for example about 25 kWh/t or about 20 kWh/t. The compaction rate, defined as the efficient length of the holes in the dye of the pelletiser divided by the diameter of these holes, may be between 0.5 and 8.0 or preferably between 1.0 and 5.0. The diameter of the holes in the dye of the pellet press may be between 2 mm and 15 mm or preferably between 3 mm and 10 mm In certain embodiments, the obtained granulated composition is in the form of pellets.

According to one aspect, the obtained granulated composition may have a moisture content from 0.1 wt.-% to 35 wt.-%, based on the total weight of the composition, such as for example from 0.2 wt.-% to 25 wt.-%, or from 0.5 wt.-% to 20 wt.-%, such as for example below 1 wt.-%, or from 2 wt.-% to 10 wt.-%. According to a further aspect, the obtained granulated composition may comprise from 0.1 wt.-% to 50 wt.-% process additive and from 99.9 wt.-% to 50 wt.-% particulate alkaline earth metal oxide or alkaline earth metal hydroxide or mixtures thereof, based on the total solids content of the obtained granulated composition.

According to one aspect, the pellets have a diameter of from 2 mm to 15 mm, or from 3 mm to 10 mm. Their shape may be essentially spherical, cylindrical, disc-shaped, or of an irregular shape.

For example, in one embodiment, the composition may be in the form of magnesium hydroxide/talc-pellets comprising 87.5 wt.-% magnesium hydroxide and 12.5 wt.-% talc, each based on the total solids content of the pellet.

### EXAMPLES

Various mixtures comprising Mg(OH)₂, talc and water were subjected to granulation in a standard pelletiser according to methods known to the skilled person in the art. The required amount of water was added at room temperature in a Henschel mixer. The Mg(OH)₂ used was obtained as an aqueous slurry (53 wt.-% solids content; Nedmag), dried, ground, rewetted and then mixed with dry talc to obtain the respective mixtures comprising Mg(OH)₂, talc and water for pelletisation. For Examples 1 to 4 and Comparative Example 1, the talc used was a commercial available grade named Mistron 85-6 F from Imerys Talc with a medium particle size of around 3.5 µm measured in a Sedigraph®. For Examples 5 and 6, and Comparative Example 2, the talc used was a commercial available grade named Mistron 89-5 F from Imerys Talc with a medium particle size of around 2.2 µm measured in a Sedigraph®. Pelletisation was done at room temperature using a laboratory press from Kahl Type 14-175. The dye used had holes of 3 mm diameter and efficient length of 9 mm meaning a compaction rate of 3.0. The pelletisation was initially carried out at room temperature, although during operation the apparatus warmed up to about 50°C.

The obtained pelletised compositions are shown in Table I:

**Table I:**

| | Ratio Mg(OH)₂ (wt.-%) | Ratio talc (wt.-%) | Solid content prior to pelletisation | Solid content after pelletisation | Difference |
|---|---|---|---|---|---|
| Ex. 1 | 50 | 50 | 93.1 wt.-% | 94.6 wt.-% | 1.5 |
| Ex. 2 | 50 | 50 | 88.6 wt.-% | 89.3 wt.-% | 0.7 |
| Ex. 3 | 75 | 25 | 85.0 wt.-% | 86.4 wt.-% | 1.4 |
| Ex. 4 | 87.5 | 12.5 | 86.5 wt.-% | 86.7 wt.-% | 0.2 |
| Comp. Ex. 1 | 100 | 0 | 84.9 wt.-% | 86.5 wt. % | 1.6 |

The listed solids contents are in respect to the total amount of material prior to and after pelletisation. It was found that in the case of Examples 1 and 2, having the 1:1 (weight) Mg(OH)₂/talc compositions, the formulation comprising more water lead to pellets with improved adherence and stability.

In a further aspect, it was found that, for the Comparative Example, wherein the pellets comprise only 100 wt.-% Mg(OH)₂ (solids content) and no process additive, the energy requirement for obtaining pellets was between 3.5 and 4 kW, compared to from 2 to 2.5 kW in Examples 1 to 4. In addition, the pelletiser was blocked after carrying out the Comparative Example, since the magnesium hydroxide in the apparatus formed agglomerates that could not be controlled.

To get more information on the reduction of energy consumption in the range between 0 and 10% talc addition, the laboratory pelletising experiments were repeated under comparable conditions as described above but with lower addition rates of talc. The results of these tests are shown in Table II:

**Table II:**

| | Ratio Mg(OH)₂ (wt.-%) | Ratio talc (wt.-%) | Solid content prior to pelletisation | Solid content after pelletisation | Difference | Energy consumption (kW) |
|---|---|---|---|---|---|---|
| Ex. 5 | 90 | 10 | 85.8 wt.-% | 88.7 wt.-% | 1.1 | 3.7 |
| Ex. 6 | 95 | 5 | 85.7 wt.-% | 88.8 wt.-% | 3.1 | 4.2 |
| Comp. Ex. 2 | 100 | 0 | 85.5 wt.-% | 87.2 wt. % | 1.7 | 4.7 |

In this second series the drop of energy consumption with increasing amounts of talc added to the mixture was clearly confirmed. The difference in energy consumption between Examples 1 to 4 on the one hand, and Examples 5 and 6 on the other hand is attributed to the different particle size of the talc employed. It could be demonstrated that already relatively small amounts of talc are able to make the pelletising process easier to run. The final pellets were well formed and stable during further manipulation.

## Claims

1. Granulated composition, comprising a particulate alkaline earth metal hydroxide or alkaline earth metal oxide or mixtures thereof and one or more process additives, wherein the said one or more process additives is selected from talc, bentonite, zeolite, diatomaceous earth, cationic mica, hydrophobic carbonates, and mixtures thereof, and wherein the granulated composition comprises from 0.1 wt.-% to 50 wt.-% process additive and from 99.9 wt.-% to 50 wt.-% particulate alkaline earth metal oxide or alkaline earth metal hydroxide or mixtures thereof, based on the total solids content of the granulated composition.

2. Granulated composition according to claim 1 having a moisture content from 0.1 wt.-% to 35 wt.-%, based on the total weight of the composition.

3. Granulated composition according to any one of the previous claims, comprising 5 wt.-% process additive and 95 wt.-% particulate alkaline earth metal oxide or alkaline earth metal hydroxide or mixtures thereof, or 10 wt.-% process additive and 90 wt.-% particulate alkaline earth metal oxide or alkaline earth metal hydroxide or mixtures thereof, based on the total solids content of the granulated composition.

4. Granulated composition according to any one of the previous claims, which is in the shape of a brick, a briquette, a pellet, a pressing, a mould, a preform, a spray-dried powder, a tablet, an aggregate, a rod, or an agglomerate.

5. Method of granulating particulate alkaline earth metal hydroxides and alkaline earth metal oxides or mixtures thereof, comprising the step of admixture of one or more process additives to the said particulate alkaline earth metal hydroxides and alkaline earth metal oxides or mixtures thereof, wherein the said one or more process additives is selected from talc, bentonite, zeolite, diatomaceous earth, cationic mica, hydrophobic carbonates, and mixtures thereof, and wherein the particulate alkaline earth metal oxide or alkaline earth metal hydroxide or mixture thereof ranges from 50 wt.-% to 99.9 wt.-%, and the amount of the process additive ranges from 50 wt.-% to 0.1 wt.-%, each on the basis of the total solids content of the composition to be granulated.

6. Method according to claim 5, wherein the said one or more process additives is a talc, such as for example a talc selected from micronized talc, bimodal talc, and cationic talc.

7. Method according to any one of claims 5 or 6, wherein the alkaline earth metal in the said particulate alkaline earth metal oxides or alkaline earth metal hydroxides or mixtures thereof is selected from magnesium, calcium, and mixtures thereof.

8. Method according to any one of claims 5 to 7, wherein the particulate alkaline earth metal oxide or alkaline earth metal hydroxide or mixture thereof is present in 95 wt.-%, and the amount of the process additive is present in 5 wt.-%, or wherein the particulate alkaline earth metal oxide or alkaline earth metal hydroxide or mixture thereof is present in 90 wt.-%, and the amount of the process additive is present in 10 wt.-%, each on the basis of the total solids content of the composition to be granulated.

9. Method according to any one of claims 5 to 8, wherein the particulate alkaline earth metal oxide or alkaline earth metal hydroxide is magnesium hydroxide.

10. Method according to any one of claims 5 to 9, which is carried out in a pelletiser.

11. Method according to any one of claims 5 to 10, wherein prior to granulating water is added to the mixture, either by admixture of water or by humidification with steam.

## Patentansprüche

1. Granulierte Zusammensetzung, umfassend ein partikelförmiges Alkalierdmetallhydroxyd oder Alkalierdmetalloxyd oder Gemische davon und ein oder mehrere Verarbeitungszusätze, wobei der eine oder die mehreren Verarbeitungszusätze ausgewählt sind aus Talk, Bentonit, Zeolith, Diatomeenerde, kationischem Glimmer, hydrophoben Carbonaten und Gemischen davon, und wobei die granulierte Zusammensetzung von 0,01 Gew.-% bis 50 Gew.-% Verarbeitungszusatz und von 99,9 Gew.-% bis 50 Gew.-% partikelförmiges Alkalierdmetalloxyd oder Alkalierdmetallhydroxyd oder Gemische davon umfasst, auf Grundlage des Gesamtfeststoffgehalts der granulierten Zusammensetzung.

2. Granulierte Zusammensetzung gemäß Anspruch 1 mit einem Feuchtigkeitsgehalt von 0,1 Gew.-% bis 35 Gew.-%, auf Grundlage des Gesamtgewichts der Zusammensetzung.

3. Granulierte Zusammensetzung gemäß irgendeinem der vorhergehenden Ansprüche, umfassend 5 Gew.-% Verarbeitungszusatz und 95 Gew.-% partikelförmiges Alkalierdmetalloxyd oder Alkalierdmetallhydroxyd oder Gemische davon, oder 10 Gew.-% Verarbeitungszusatz und 90 Gew.-% partikelförmiges Alkalierdmetalloxyd oder Alkalierdmetallhydroxyd oder Gemische davon, auf Grundlage des Gesamtfeststoffgehalts der granulierten Zusammensetzung.

4. Granulierte Zusammensetzung gemäß irgendeinem der vorhergehenden Ansprüche, die in Form eines Ziegels, eines Briketts, eines Pellets, eines Ziehteils, einer Gussform, einer Vorform, eines sprühgetrockneten Pulvers, einer Tablette, eines Aggregats, eines Stabs oder eines Agglomerats ist.

5. Verfahren zum Granulieren von partikelförmigen Alkalierdmetallhydroxyden oder Alkalierdmetalloxyden oder Gemischen davon, umfassend den Schritt Zumischen eines oder mehrerer Verarbeitungszusätze zu den partikelförmigen Alkalierdmetallhydroxyden oder Alkalierdmetalloxyden oder Gemischen davon, wobei der eine oder die mehreren Verarbeitungszusätze ausgewählt sind aus Talk, Bentonit, Zeolith, Diatomeenerde, kationischem Glimmer, hydrophoben Carbonaten und Gemischen davon, und wobei das partikelförmige Alkalierdmetalloxyd oder Alkalierdmetallhydroxyd oder Gemisch davon im Bereich von 50 Gew.-% bis 99,9 Gew.-% ist, und die Menge des Verarbeitungszusatzes im Bereich von 50 Gew.-% bis 0,1 Gew.-% ist, jeweils auf Grundlage des Gesamtfeststoffgehalts der zur granulierenden Zusammensetzung.

6. Verfahren gemäß Anspruch 5, wobei der eine oder die mehreren Verarbeitungszusätze ein Talk ist, wie zum Beispiel ein Talk, ausgewählt aus mikronisiertem Talk, bimodalem Talk und kationischem Talk.

7. Verfahren gemäß irgendeinem der Ansprüche 5 oder 6, wobei das Alkalierdmetall in den partikelförmigen Alkalierdmetalloxyden oder Alkalierdmetallhydroxyden oder Gemischen davon ausgewählt ist aus Magnesium, Calcium oder Gemischen davon.

8. Verfahren gemäß irgendeinem der Ansprüche 5 bis 7, wobei das partikelförmige Alkalierdmetalloxyd oder Alkalierdmetallhydroxyd oder Gemische davon zu 95 Gew.-% vorliegt und die Menge des Verarbeitungszusatzes zu 5 Gew.-% vorliegt, oder wobei das partikelförmige Alkalierdmetalloxyd oder Alkalierdmetallhydroxyd oder Gemische davon zu 90 Gew.-% vorliegt und die Menge des Verarbeitungszusatzes zu 10 Gew.-% vorliegt, jeweils auf Grundlage des Gesamtfeststoffgehalts der zur granulierenden Zusammensetzung.

9. Verfahren gemäß irgendeinem der Ansprüche 5 bis 8, wobei das partikelförmige Alkalierdmetalloxyd oder Alkalierdmetallhydroxyd Magnesiumhydroxyd ist.

10. Verfahren gemäß irgendeinem der Ansprüche 5 bis 9, das in einem Pelletierer ausgeführt wird.

11. Verfahren gemäß irgendeinem der Ansprüche 5 bis 10, wobei vor dem Granulieren Wasser zum Gemisch zugesetzt wird, entweder durch Zumischen von Wasser oder durch Anfeuchtung mit Dampf.

## Revendications

1. Composition granulée, comprenant un hydroxyde de métal alcalino-terreux ou un oxyde de métal alcalino-terreux particulaire ou un de leurs mélanges, et un ou plusieurs additifs de procédé, où l'un ou les plusieurs additifs de procédé sont sélectionnés parmi le talc, la bentonite, la zéolite, la terre de diatomées, le mica cationique, les carbonates hydrophobes, et leurs mélanges, et où la composition granulée comprend de 0,1 pour cent en poids à 50 pour cent en poids d'additif de procédé et de 99,9 pour cent en poids à 50 pour cent en poids d'oxyde de métal alcalino-terreux ou d'hydroxyde de métal alcalino-terreux particulaire ou de leurs mélanges, à base du total du contenu solide de la composition granulée.

2. Composition granulée selon la revendication 1 ayant un contenu en humidité de 0,1 pour cent en poids à 35 pour cent en poids, à base du poids total de la composition.

3. Composition granulée selon une quelconque des revendications précédentes, comprenant 5 pour cent en poids d'additif de procédé et 95 pour cent en poids d'oxyde de métal alcalino-terreux ou d'hydroxyde de métal alcalino-terreux particulaire ou de leurs mélanges, ou 10 pour cent en poids d'additif de procédé et 90 pour cent en poids d'oxyde de métal alcalino-terreux ou d'hydroxyde de métal alcalino-terreux particulaire ou de leurs mélanges, à base du total du contenu solide de la composition granulée.

4. Composition granulée selon une quelconque des revendications précédentes, qui est en forme d'une brique, d'une briquette, d'une boulette, d'un comprimé, d'un moule, d'une préforme, d'une poudre desséchée par nébulisation, d'une tablette, d'un agrégat, d'une tige, ou d'un agglomérat.

5. Procédé pour granuler des hydroxydes de métal alcalino-terreux ou des oxydes de métal alcalino-terreux particulaires ou de leurs mélanges, comprenant l'étape d'ajouter un ou plusieurs additifs de procédé auxdits hydroxydes de métal alcalino-terreux ou oxydes de métal alcalino-terreux particulaires ou leurs mélanges, où l'un ou les plusieurs additifs de procédé sont sélectionnés parmi le talc, la bentonite, la zéolite, la terre de diatomées, le mica cationique, les carbonates hydrophobes, et leurs mélanges, et où l'oxyde de métal alcalino-terreux ou l'hydroxyde de métal alcalino-terreux particulaire ou leurs mélanges sont dans l'intervalle de 50 pour cent en poids à 99,9 pour cent en poids, et la quantité d'additif de procédé est dans l'intervalle de 50 pour cent en poids à 0,1 pour cent en poids, chacun à la base do poids total du contenu solide de la composition à être granulé.

6. Procédé selon la revendication 5 où l'un ou les plusieurs additifs de procédé est un talc, comme par exemple un talc sélectionné parmi du talc micronisé, du talc bimodal, et du talc cationique.

7. Procédé selon une quelconque des revendications 5 ou 6, où le métal alcalino-terreux dans lesdits oxydes de métal alcalino-terreux ou hydroxydes de métal alcalino-terreux particulaire ou leurs mélanges est sélectionné parmi le magnésium, le calcium, et leurs mélanges.

8. Procédé selon une quelconque des revendications 5 à 7, où l'oxyde de métal alcalino-terreux ou l'hydroxyde de métal alcalino-terreux particulaire ou leur mélange est présent par 95 pour cent en poids, et la quantité d'additif de procédé est présente par 5 pour cent en poids, ou dans lequel l'oxyde de métal alcalino-terreux ou l'hydroxyde de métal alcalino-terreux particulaire ou leur mélange est présent par 90 pour cent en poids, et la quantité d'additif de procédé est présente par 10 pour cent en poids, chacun à la base do poids total du contenu solide de la composition à être granulé.

9. Procédé selon une quelconque des revendications 5 à 8, où l'oxyde de métal alcalino-terreux ou l'hydroxyde de métal alcalino-terreux particulaire est l'hydroxyde de magnésium.

10. Procédé selon une quelconque des revendications 5 à 9, qui est exécuté dans une pastilleuse.

11. Procédé selon une quelconque des revendications 5 à 10, dans lequel avant la granulation de l'eau est ajoutée au mélange, ou bien par ajout d'eau, ou bien par humidification avec de la vapeur.
